# DEMANDE DE BREVET EUROPEEN

(11) **EP 2 230 612 A1**
(43) Date de publication de la demande: **22.09.2010**
(21) Numéro de dépôt: 10155856.7
(22) Date de dépôt: 09.03.2010
(51) Int. Cl.: G06F 17/30

(54) **Génération de recommandations pour un serveur de contenus**

(30) Priorité: 19.03.2009 FR 0951749
(71) Demandeur: FRANCE TELECOM, 75015 Paris (FR)
(72) Inventeur: Agro, Roberto, 92120, Montrouge (FR); Murphy, Vincent, 59110, La Madeleine (FR)
(74) Mandataire: Delumeau, François Guy

(57) **Abrégé**

Serveur de contenus multimédia (DMS) comportant une zone de mémoire (CL) dans laquelle sont stockées des métadonnées, associées à au moins un contenu accessible via ledit serveur, utilisables pour une sélection d'au moins un dit contenu en vue de formuler une demande d'accès au contenu sélectionné, ledit serveur (DMS) comprenant:
- des moyens d'enregistrement (14) aptes à enregistrer, dans une structure de données (LOG), tout ou partie des métadonnées (MUS1, VID) stockées dans ladite zone de mémoire;
- des moyens (16) pour envoyer ladite structure de données (LOG) à un moteur de recommandations (RE) apte à obtenir, à partir des métadonnées (MUS1, VID) contenues dans ladite structure de données (LOG), des recommandations de contenu, sous forme de métadonnées (MUS2) d'au moins un contenu accessible via ledit serveur (DMS);
- des moyens (16) pour enrichir les métadonnées stockées dans ladite zone de mémoire (CL) avec lesdites recommandations de contenu (MUS2).

## Description

### Arrière-plan de l'invention

La présente invention se rapporte au domaine des réseaux de télécommunication dans lesquels les terminaux communiquent entre eux en utilisant par exemple le protocole UPnP défini par l'UPnP Forum et le Consortium DLNA. Il peut s'agir par exemple d'un réseau domestique ("Home Network"), ou d'un réseau local (LAN ou Local Area Network).

De façon connue, ce protocole vise à permettre l'interopérabilité et l'interconnexion d'équipements multimédia, sans configuration par l'utilisateur.

Dans la suite de la description, on parlera de réseaux UPnP pour désigner un ensemble d'équipements interconnectés entre eux par réseau et utilisant le protocole UPnP pour communiquer entre eux à travers ce réseau.

Un dispositif est dit UPnP s'il est apte à communiquer au moyen d'un protocole de commande conforme au standard UPnP ou à un autre standard équivalent ou dérivé et/ou met en oeuvre une ou des fonctions définies dans un tel standard.

On distingue généralement, dans les architectures UPnP, différents types de dispositifs UPnP : les dispositifs de contrôle DMC (Digital Media Controller), les serveurs de contenus DMS (Digital Media Server) et les dispositifs de restitution de contenus DMR (Digital Media Renderer), DMA (Digital Media Adapter) et DMP (Digital Media Player).

Dans un réseau UPnP, le dispositif de contrôle DMC a un rôle central en ce qu'il permet de découvrir les autres dispositifs UPnP du réseau, les services offerts par ces dispositifs, et la mise en relation d'un serveur DMS avec un dispositif de restitution DMR ou DMA pour que ce dispositif de restitution restitue un contenu multimédia indexé par ce serveur DMS.

Historiquement, les contenus multimédias manipulés dans les réseaux UPnP étaient des contenus locaux au réseau domestique.

Maintenant, certains serveurs de contenus DMS permettent également d'indexer des contenus accessibles en ligne, par exemple sur le réseau Internet, et de les rendre disponibles localement dans le réseau UPnP.

L'invention propose un mécanisme pour enrichir automatiquement la liste des contenus indexés dans un serveur de contenus, mécanisme qui soit applicable à un serveur de contenus de type UPNP, notamment à un serveur de contenus permettent d'indexer des contenus accessibles en ligne.

### Objet et résumé de l'invention

Selon un premier aspect, l'invention concerne un serveur de contenus multimédia comportant une zone de mémoire dans laquelle sont stockées des premières métadonnées, associées à au moins un contenu accessible via ledit serveur, utilisables pour une sélection d'au moins un dit contenu en vue de formuler une demande d'accès au contenu sélectionné, le serveur comportant :
- des moyens d'enregistrement aptes à enregistrer, dans une structure de données, tout ou partie des premières métadonnées stockées dans ladite zone de mémoire;
- des moyens pour envoyer ladite structure de données à un moteur de recommandations apte à obtenir, à partir des premières métadonnées contenues dans ladite structure de données, des recommandations de contenu, sous forme de deuxièmes métadonnées d'au moins un autre contenu accessible via ledit serveur;
- des moyens pour obtenir lesdites recommandations de contenu ; et
- des moyens pour enrichir les premières métadonnées stockées dans ladite zone de mémoire avec lesdites recommandations de contenu.

Corrélativement, l'invention vise un procédé de mise à jour d'une zone de mémoire d'un serveur de contenus multimédia, ladite zone de mémoire comportant des premières métadonnées, associées à au moins un contenu accessible via ledit serveur, utilisables pour une sélection d'au moins un dit contenu en vue de formuler une demande d'accès au contenu sélectionné, ledit procédé étant mis en oeuvre par ledit serveur et comportant :
- une étape d'enregistrement, dans une structure de données, de tout ou partie des premières métadonnées stockées dans ladite zone de mémoire;
- une étape d'envoi de ladite structure de données à un moteur de recommandations apte à obtenir, à partir des premières métadonnées contenues dans ladite structure de données, des recommandations de contenu, sous forme de deuxièmes métadonnées d'au moins un autre contenu accessible via ledit serveur;
- une étape d'obtention desdites recommandations de contenu ; et
- une étape d'enrichissement des premières métadonnées stockées dans ladite zone de mémoire avec lesdites recommandations de contenu.

L'invention permet ainsi d'enrichir automatiquement la liste des métadonnées de contenus multimédias d'un serveur de contenus, ces métadonnées étant, dans le cas d'exemple d'un serveur de contenu UPnP, accessibles par un dispositif de contrôle DMC du réseau pour une sélection d'au moins un contenu à partir de ces métadonnées, et une restitution des contenus ainsi sélectionnés.

Par contenus accessibles via le serveur de contenus, on entend ici aussi bien les contenus accessibles directement auprès dudit serveur de contenus, c'est-à-dire stockés physiquement au niveau de ce serveur, sur un support propre à ce serveur, que les contenus accessibles via le serveur de contenus mais stockés physiquement au niveau d'un serveur distant, notamment d'un serveur de contenus en ligne. L'ensemble de ces contenus sont donc susceptibles de faire l'objet auprès dudit serveur d'une demande d'accès, que ce soit en vue d'une restitution ou d'un simple téléchargement.

Dans un mode de réalisation, les contenus dont des métadonnées sont enregistrées dans ladite structure de données sont des contenus ayant fait l'objet d'une demande d'accès via ledit serveur, par exemple en vue d'une restitution par des dispositifs de restitution DMR, DMA ou DMP du réseau. Aucune modification n'est donc nécessaire au niveau des dispositifs de restitutions DMR, DMA, DMP ni au niveau du dispositif de contrôle DMC.

Les contenus multimédias eux-mêmes sont physiquement stockés sur le serveur ou sur une autre machine, par exemple sur un serveur Web accessible via une liaison établie à travers le réseau Internet.

Lorsque les contenus multimédia sont stockés sur un serveur distant, le serveur de contenu selon l'invention se comporte en proxy. Dans ce mode de réalisation particulier, le serveur comprend des moyens d'accès pour obtenir le contenu multimédia auprès du serveur distant et relayer le contenu multimédia vers un ou plusieurs dispositifs de restitution, notamment vers un dispositif de restitution UPnP du réseau local auquel appartient le serveur de contenu. Ainsi la restitution par un dispositif de restitution UPnP s'effectue de manière identique que le contenu à restituer soit stocké localement par le serveur de contenus du réseau local ou à distance par un serveur distant. Il en résulte un enrichissement du catalogue de contenus susceptibles d'être restitués par un dispositif de restitution UPnP d'un réseau local.

En outre, le serveur de contenu comporte des moyens pour relayer une demande d'accès à un contenu en provenance d'un dispositif de restitution vers un serveur de contenu distant, les moyens d'enregistrement dudit serveur étant conçus pour enregistrer également dans ladite structure de données des métadonnées associées aux contenus ayant fait l'objet d'une demande de restitution de contenu relayée via ledit serveur.

Les métadonnées peuvent contenir différents types d'information. Pour un album de musique, elles peuvent par exemple contenir le nom de l'album, le nom des titres, le nom de l'interprète et un pointeur vers le contenu musical lui-même.

Le moteur de recommandations est conçu pour générer des recommandations de contenu, sous forme de métadonnées associées aux contenus recommandés, en fonction des métadonnées de contenus reçues dans la structure de données.

Par exemple, lorsque la structure de données comporte un titre de film, le moteur de recommandations peut sélectionner les métadonnées d'autres films du même réalisateur, de la bande originale de ce film, de la biographie d'un des acteurs, ....

On notera que la méthode de génération des recommandations à proprement parler ne fait pas partie de l'invention. Ce mécanisme peut être mis en oeuvre par un moteur de recommandations du type de ceux connus de l'état de la technique. Par exemple, le moteur de MEDIA UNBOUND (www.mediaunbound.com).

Dans un mode particulier de réalisation de l'invention, la structure comporte, en association avec les métadonnées d'au moins un contenu multimédia, une information représentative du fait que ledit serveur a déjà transmis, au moins partiellement, ce contenu multimédia à au moins un dispositif de restitution DMA, DMR, DMP du réseau.

Cette information constitue une mesure (ou poids) de l'intérêt que portent les utilisateurs du réseau à un contenu multimédia particulier. Elle peut donc être utilisée en tant que telle par le moteur de recommandations pour produire des recommandations sous forme de métadonnées.

Ainsi, grâce à l'invention, un opérateur peut proposer aux utilisateurs d'un réseau, par exemple un réseau domestique, des contenus susceptibles d'intéresser fortement ces utilisateurs, de façon totalement automatique et non intrusive.

L'invention concerne également une plateforme, apte à communiquer avec au moins un serveur de contenus multimédia selon l'invention et comprenant
- des moyens pour recevoir dudit serveur une structure de données comprenant des métadonnées associées à au moins un dit contenu multimédia;
- des moyens pour transmettre ladite structure de données à un moteur de recommandations apte à obtenir, à partir des métadonnées contenues dans ladite structure de données, des recommandations de contenu, sous forme de métadonnées d'au moins un contenu accessible via ledit serveur;
- des moyens pour obtenir lesdites recommandations de contenu ; et
- des moyens pour transmettre audit serveur lesdites recommandations de contenu.

Une telle plateforme sert d'intermédiaire entre un ou plusieurs serveurs de contenus et un moteur de recommandation. Ceci permet par exemple de mettre en oeuvre à moindre coût des fonctions de traduction de métadonnées lorsque le format de présentation des métadonnées fournies par un serveur de contenu est différent du format de présentation des métadonnées générées par le moteur de recommandation.

Selon un mode de réalisation, cette plateforme comprend
- des moyens pour recevoir, avec ladite structure de données, un identifiant propre audit serveur,
- des moyens pour fournir, sur requête comprenant ledit identifiant, des recommandations de contenu générées à partir d'au moins une structure de données envoyée avec cet identifiant.

La plateforme peut ainsi coopérer avec différents serveurs tout en permettant la génération de recommandations propres à un seul de ces serveurs.

L'invention vise aussi un système comportant un serveur selon l'invention et une plateforme selon l'invention.

Dans un mode de réalisation du serveur selon l'invention, les moyens d'enregistrement sont conçus pour enregistrer dans ladite structure uniquement des métadonnées associées à un sous-ensemble prédéfini de contenus parmi l'ensemble des contenus accessibles via ledit serveur. Ceci permet de générer des recommandations ayant différents usage.

Par exemple, lorsque le sous-ensemble prédéfini de contenus est constitué par des contenus ayant fait l'objet d'une demande d'accès via ledit serveur, des recommandations pourront être générées pour des contenus présentant une relation (même auteur, même genre musical, etc) avec les contenus ayant fait l'objet d'une demande d'accès, c'est-à-dire des contenus intéressant a priori l'utilisateur.

Selon un autre exemple, le sous-ensemble prédéfini est un sous-ensemble défini par l'utilisateur. Dans ce cas, les recommandations pourront être générées pour des contenus appartenant à un genre musical donné, à un auteur donné, à une période de temps donnée, etc, selon le sous-ensemble défini par l'utilisateur. Ce sous-ensemble est défini par exemple en sélectionnant, à partir des métadonnées mémorisées par le serveur de contenu, un sous-ensemble de contenus. Le serveur enregistrera alors dans la structure de données les métadonnées des contenus formant ce sous-ensemble et générera des recommandations conformément à la thématique définie par l'utilisateur.

Selon un mode particulier de réalisation, le serveur selon l'invention comporte (autrement dit incorpore) le moteur de recommandations.

En variante, le moteur de recommandations peut être partagé par plusieurs serveurs conformes à l'invention, voire par d'autres équipements.

Le serveur selon l'invention comporte, dans un mode de réalisation particulier :
- des moyens pour envoyer, avec ladite structure de données, un identifiant propre audit serveur, à une entité apte à transmettre ladite structure de données audit moteur de recommandations et à obtenir des recommandations de contenu à partir de ladite structure de données; et
- des moyens pour interroger ladite entité au moyen dudit identifiant afin d'obtenir des recommandations de contenu générées à partir d'au moins une structure de données envoyée avec cet identifiant.

Le serveur peut ainsi obtenir des recommandations qui lui sont propres. Lorsque ce serveur comprend un logiciel utilisé par un ou plusieurs utilisateurs, les recommandations produites seront propres à ce ou ces utilisateurs.

L'entité précitée peut être le moteur de recommandations lui-même, un serveur incorporant ce moteur de recommandations ou une plateforme d'intermédiation entre le serveur et le moteur de recommandations.

Dans un mode particulier de réalisation, la zone de mémoire dans laquelle le serveur mémorise les métadonnées comporte au moins une sous-zone réservée à au moins une partie desdites métadonnées recommandées.

Dans un mode de réalisation particulier de l'invention, la zone mémoire est organisée sous-forme d'une arborescence, chaque sous-zone étant une sous-arborescence de cette arborescence.

Par exemple, une sous-arborescence zone peut être réservée par type de contenus (image, musique, vidéo, ...).

Ce mode particulier de réalisation permet à l'utilisateur d'identifier facilement et rapidement les métadonnées recommandées dans l'arborescence du serveur de contenus DMS.

Les métadonnées recommandées peuvent être obtenues par le serveur selon l'invention de différentes façons, par exemple au démarrage du serveur, puis périodiquement.

Dans un mode particulier de réalisation, les différentes étapes du procédé mise à jour selon l'invention sont déterminées par des instructions de programmes d'ordinateurs.

En conséquence, l'invention vise aussi un programme d'ordinateur, sur un support d'informations, ce programme comportant des instructions adaptées à la mise en oeuvre des étapes du procédé de mise à jour selon l'invention, ces étapes étant mises en oeuvre par le serveur de contenus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disk) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un serveur UPnP conforme à un mode particulier de mise en oeuvre de l'invention ;
- la figure 2 représente un exemple d'arborescence de contenus multimédias pouvant être utilisés dans l'invention ; et
- la figure 3 représente, de façon schématique, les principales étapes d'un procédé de mise à jour conforme à un mode particulier de réalisation de l'invention.

### Description détaillée d'un mode de réalisation

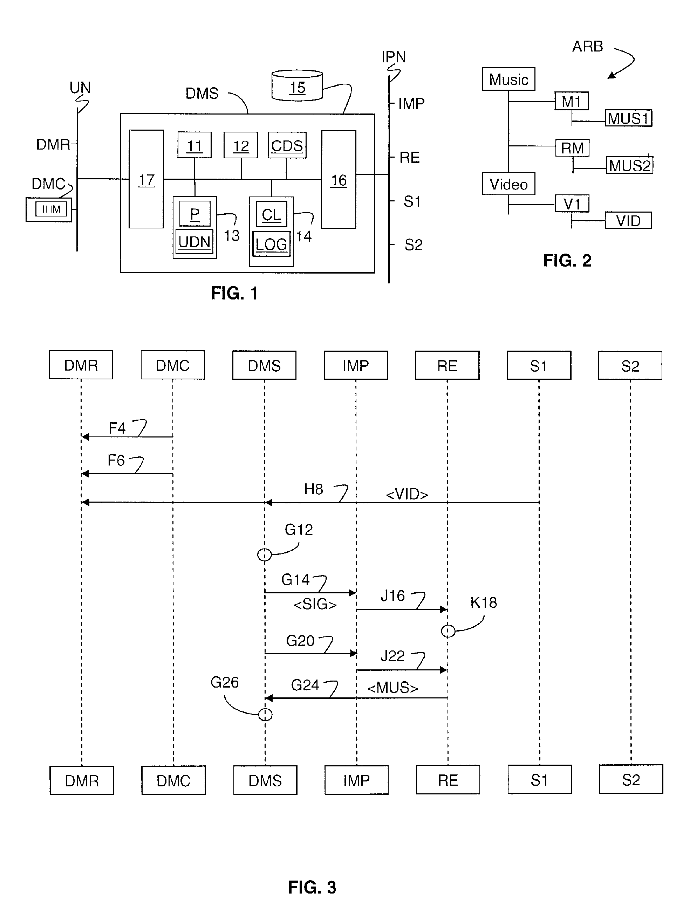

La **figure 1** représente un serveur UPnP DMS conforme à l'invention.

Ce serveur DMS met en oeuvre les fonctions définies pour un serveur de contenus DMS dans le standard UPnP.

Dans l'exemple de réalisation décrit ici, le serveur DMS a l'architecture matérielle d'un ordinateur. Il comporte ainsi un processeur 11, une mémoire vive 12, une mémoire morte de type ROM 13, une mémoire 14 non volatile réinscriptible de type Flash et une mémoire externe 15.

Dans le mode de réalisation décrit ici, la mémoire morte 13 du serveur UPnP DMS comporte un identifiant UDN (Unique Device Name) identifiant, comme de façon définie par le standard UPnP, de façon unique le serveur DMS.

Le serveur DMS comporte en outre une interface de communication 17 convenant pour communiquer avec des dispositifs UPnP, notamment de type DMR et DMC d'un réseau UPnP UN.

Le serveur de contenus UPnP DMS comporte une interface de communication 16 convenant pour communiquer avec d'autres équipements via le réseau Internet IPN, notamment avec les serveurs de contenus distants S1 et S2.

Sur la figure 1, on a représenté quatre équipements connectés au réseau Internet IPN, aptes à communiquer avec le serveur UPnP DMS, à savoir une plateforme d'intermédiation IMP, un moteur de recommandations RE et deux serveurs de contenus distants S1 et S2.

Le serveur de contenus DMS comporte des moyens définis par la norme UPnP, et connu sous l'acronyme CDS (Content Directory Service) pour gérer une zone mémoire CL comportant des métadonnées associées à des contenus multimédias.

Il est d'usage de dire que ces contenus multimédias sont indexés dans la zone mémoire CL. Les contenus multimédias indexés dans la zone mémoire CL peuvent être stockés au niveau du serveur UPnP DMS ou sur des serveurs de contenus distants du type de S1 ou S2.

Dans le mode de réalisation décrit ici, la zone mémoire CL est mémorisée dans la mémoire non volatile réinscriptible 14 et organisée sous forme d'une arborescence ARB représentée à la **figure 2**.

Dans l'exemple décrit ici, cette arborescence ARB comporte deux répertoires principaux "Music" et "Video" destinés à indexer respectivement des métadonnées de fichiers musicaux et de fichiers vidéos.

Le répertoire "Music" comporte deux sous-répertoires "M1" et "RM".

Le répertoire "RM" est une sous-arborescence réservée à l'indexation des métadonnées associées à des fichiers musicaux recommandées au sens de l'invention. Dans l'exemple de la figure 2, ce répertoire "RM" comporte les métadonnées MUS2 d'un fichier de musique (par exemple au format MP3) recommandées aux utilisateurs du réseau UPnP UN.

Dans l'exemple de réalisation décrit ici :
- les métadonnées d'un fichier musical "MUS1" sont enregistrées dans le sous-répertoire "M1" ; et
- le répertoire "Video" comporte un sous-répertoire "V1" dans lequel des métadonnées "VID" d'un fichier vidéo sont enregistrées.

Les métadonnées enregistrées dans l'arborescence ARB sont utilisées pour sélectionner un contenu parmi ceux accessibles via le serveur DMS, notamment en cas de demande de restitution d'un de ces contenus émise à partir d'un dispositif de restitution UPnP DMR, relié au serveur DMS.

Selon ce qui est défini dans le protocole UPnP, les métadonnées, enregistrées dans l'arborescence ARB et gérées par le serveur DMS, sont accessibles sur requête, par un dispositif de contrôle DMC, en vue d'une sélection de contenu à restituer par un dispositif de restitution DMR.

Conformément à l'invention, le serveur DMS comprend un module logiciel, dit module d'enregistrement, pour mémoriser une structure de données LOG dans laquelle il peut enregistrer des métadonnées contenues dans l'arborescence ARB.

Les contenus pour lesquels des métadonnées sont enregistrées dans la structure de données LOG, sont des contenus accessibles via le serveur DMS, c'est-à-dire, soit des contenus accessibles directement auprès du serveur DMS, soit des contenus accessibles auprès d'un des serveurs distants S1 ou S2 via le serveur DMS fonctionnant en proxy pour le compte des serveurs distants S1 ou S2, soit les deux types de contenus.

Selon un premier mode de réalisation, le module d'enregistrement est conçu pour enregistrer dans la structure de données LOG des métadonnées associées à tous les contenus de l'ensemble des contenus accessibles via le serveur DMS.

Selon un deuxième mode de réalisation, le module d'enregistrement est conçu pour enregistrer dans la structure de données LOG uniquement des métadonnées associées à un sous-ensemble prédéfini de contenus parmi l'ensemble des contenus accessibles via le serveur DMS.

Selon une première variante de ce deuxième mode de réalisation, ce sous-ensemble est constitué par les contenus ayant fait l'objet d'une demande d'accès auprès du serveur DMS. Dans cette première variante, l'enregistrement s'effectue à chaque demande d'accès à un contenu traitée par le serveur DMS, par exemple en cas de demande de transfert de contenu ou de demande de restitution d'un contenu traitée par le serveur DMS. En conséquence, les métadonnées enregistrées dans la structure de données LOG sont relatives à des contenus ayant fait l'objet d'une demande de restitution, ou, plus généralement, une demande d'accès.

Selon une deuxième variante de réalisation de ce deuxième mode de réalisation, ce sous-ensemble est constitué uniquement par les contenus accessibles directement auprès du serveur DMS, à l'exclusion de ceux accessibles auprès d'un des serveurs distants S1 ou S2.

Selon une troisième variante de réalisation de ce deuxième mode de réalisation, ce sous-ensemble de contenu est défini selon une sélection effectuée par un utilisateur et/ou sur la base de critères définis par l'utilisateur: il est ainsi possible à un utilisateur d'obtenir des recommandations uniquement pour un domaine musical donné (musique classique, variétés françaises, jazz, etc) ou un genre de vidéo (comédie, documentaire, science fiction, etc).

Les différentes variantes citées ci-dessus pour la définition du sous-ensemble sont combinables entre elles. Une interface de paramétrage du serveur DMS est prévue pour permettre une définition aisée du sous-ensemble à considérer dans la génération de la structure de données LOG.

Le module d'enregistrement est conçu en outre pour enregistrer, dans la structure de données LOG, en association avec les métadonnées associées à un contenu, une information représentative du fait que le serveur DMS a déjà transmis, au moins partiellement, ce contenu multimédia à au moins un dispositif de restitution ou à un autre dispositif ayant émis une demande d'accès à ce contenu.

Cette information peut par exemple être un pourcentage, « 0% » signifiant « contenu non restitué », « 100% » signifiant « contenu entièrement restitué », « x% » signifiant « contenu restitué à x% ».

Cette information peut aussi comporter le nombre de fois qu'un contenu multimédia a été accédé.

Quoi qu'il en soit, cette information constitue une mesure (ou poids) de l'intérêt que portent les utilisateurs du réseau UPnP à un contenu multimédia particulier. Elle peut donc être utilisée en tant que telle par le moteur de recommandations pour choisir les métadonnées recommandées. Cette information est particulièrement intéressante à utiliser dans le cas du premier mode de réalisation décrit ci-dessus, car elle permet une présélection automatique par le moteur de recommandation, parmi l'ensemble de tous les contenus accessibles pour lesquels des métadonnées sont reçues, des contenus intéressant les utilisateurs.

Dans l'exemple de réalisation décrit ici, la structure de données LOG est mémorisée dans la mémoire non volatile réinscriptible de type Flash 14.

On suppose dans la suite de la description que le serveur UPnP DMS enregistre dans la structure de données LOG, en association avec les métadonnées d'un contenu multimédia, un pourcentage de restitution (0% à 100%) de ce contenu multimédia.

Conformément à l'invention, le serveur UPnP DMS envoie cette structure de données LOG au moteur de recommandations RE. Dans l'exemple de réalisation décrit ici, le serveur UPnP DMS envoie la structure de données LOG à la plateforme d'intermédiation IMP qui la relaie vers le moteur de recommandations.

Le moteur de recommandation RE analyse la structure de données reçue pour produire des recommandations de contenu à partir des métadonnées contenues dans cette structure. Ces recommandations sont produites sous forme de métadonnées associées à des contenus accessibles via le serveur DMS, notamment à des contenus accessibles en ligne auprès d'un serveur distant S1 ou S2. Ces recommandations sont ainsi aptes à être enregistrées dans l'arborescence ARB gérées par le serveur DMS, au même titre que les autres métadonnées de cette arborescence.

Optionnellement, le format de présentation des métadonnées, formant recommandations de contenu, générées par le moteur de recommandation RE, est différent du format de présentation des métadonnées présentes dans la structure de données LOG. Une adaptation de format est dans ce cas effectuée, de préférence par la plateforme d'intermédiation, voire par le serveur DMS ou le moteur de recommandations. Cette adaptation est effectuée, d'une part, sur les métadonnées contenues dans la structure de données LOG pour générer des métadonnées adaptées pour un traitement par le moteur de recommandation, et, d'autre part, sur les métadonnées générées par le moteur de recommandation RE pour générer des métadonnées adaptées pour un stockage dans l'arborescence ARB.

Dans la suite de la description, on fait l'hypothèse, que le moteur de recommandations RE :
- ignore toute métadonnée associée à un contenu multimédia restitué à moins de 20% ; et
- insère dans les recommandations de contenu les métadonnées associées à la bande originale des films restitués sur le réseau UPnP.

La mémoire morte de type ROM 13 comporte un programme d'ordinateur P conforme à l'invention pour l'exécution du procédé de mise à jour de la zone de mémoire CL et dont les principales étapes G12 à G26 vont maintenant être décrites en référence à la **figure 3****.**

Nous supposerons dans cet exemple, qu'avant la mise en oeuvre de l'invention, l'arborescence ARB comportait :
- les répertoires principaux "Music" et "Video" ;
- les sous-répertoires "M1" et "V1" ;
- les métadonnées "MUS1" dans le sous-répertoire M1,
- les métadonnées "VID" dans le sous-répertoire V1,
- le sous-répertoire "RM" (et a fortiori son contenu "MUS2") n'étant pas encore créé dans l'arborescence ARB.

Dans le mode de réalisation décrit ici, nous supposerons que l'utilisateur utilise une interface homme-machine IHM du dispositif de contrôle UPnP DMC pour visualiser le contenu de l'arborescence ARB, et pour sélectionner les métadonnées "MUS1" du fichier musical et désigner le dispositif de restitution DMR pour écouter cette musique.

De façon connue, le dispositif de contrôle DMC envoie, au cours d'une étape F4, l'URL de ce fichier musical au dispositif de restitution DMR en utilisant l'action UPnP nommée "SetAVTransportURI".

Puis, au cours d'une étape F6, le dispositif de contrôle DMC envoie au dispositif de restitution DMR une instruction de type Play, afin que ce dernier ouvre une connexion vers le serveur DMS.

Nous supposerons dans cet exemple que le fichier musical sélectionné est hébergé par le serveur distant S1 du réseau Internet IPN. Ce fichier est alors transmis, au cours d'une étape H8, au dispositif de restitution DMR, via le serveur DMS. Dans ce mécanisme, le serveur DMS peut être qualifié de proxy en ce qu'il sert d'intermédiaire entre le serveur de contenus distant S1 et le dispositif de restitution DMR, aussi bien pour la transmission au serveur S1 des demandes d'accès à un contenu en provenance du dispositif de restitution DMR, que pour la transmission au dispositif de restitution DMR des contenus fournis par le serveur S1.

Nous supposerons que l'utilisateur interrompt le téléchargement après que 20% de ce contenu a été téléchargé par le dispositif de restitution DMR.

Dans le mode de réalisation décrit ici, le serveur UPnP DMS enregistre systématiquement, au cours d'une étape G12, dans la structure de données LOG, les métadonnées des contenus indexés dans l'arborescence ARB et accédés par les dispositifs du réseau UPnP, ainsi que le pourcentage de restitution. Les métadonnées MUS1 du fichier musical accédé par le dispositif de restitution DMR et l'information « 20% » sont donc enregistrées dans cette structure de données LOG.

Nous supposerons qu'un autre utilisateur du réseau UPnP télécharge le fichier vidéo associé aux métadonnées VID, dans son intégralité.

Les métadonnées VID et l'information « 100% » sont donc enregistrées dans cette structure de données LOG au cours d'une même étape G12.

Conformément à l'invention, le serveur UPnP DMS envoie à la plateforme d'intermédiation IMP, au cours d'une étape G14, un signal SIG véhiculant la structure de données LOG et un identifiant propre au serveur de contenus DMS.

Dans un mode de réalisation particulier, cet identifiant est constitué par un identifiant UDN (Unique Device Name) du serveur DMS, c'est-à-dire du programme mettant en oeuvre ce serveur. Il peut notamment aussi être constitué par une clef de licence propre au serveur UPnP.

Dans l'exemple de réalisation décrit ici, ces envois de structure de données se font de façon périodique. En variante, ils pourraient aussi être effectués sur commande d'un utilisateur du réseau UN.

Dans l'exemple de réalisation décrit ici, le signal SIG est transmis par la plateforme d'intermédiation IMP au moteur de recommandations RE au cours d'une étape J16.

En variante, le moteur de recommandations RE peut être intégré dans la plateforme d'intermédiation IMP.

Dans l'exemple de réalisation décrit ici, le moteur de recommandations RE reçoit donc :
- les métadonnées MUS1 associées à l'information « 20% ».
- les métadonnées VID associées à l'information « 100% ».

Au cours d'une étape K18, le moteur de recommandations RE identifie, sur la base de la structure de données LOG, des contenus susceptibles d'intéresser les utilisateurs du réseau UPnP UN.

Conformément à l'hypothèse précédente, le moteur de recommandations RE ignore les métadonnées MUS1 et sélectionne un fichier musical (de métadonnées MUS2) comportant la bande originale de la vidéo de métadonnées VID.

Dans l'exemple de réalisation décrit ici, le serveur UPnP DMS interroge régulièrement, par l'envoi d'une requête, la plateforme d'intermédiation IMP pour obtenir des recommandations de contenus (étape G20).

Dans l'exemple de réalisation décrit ici, cette requête est transmise par la plateforme d'intermédiation IMP au moteur de recommandations RE au cours d'une étape J22.

Conformément à l'invention, le serveur UPnP DMS envoie une requête, contenant un identifiant propre au serveur DMS, pour obtenir des recommandations générées à partir de structures de données LOG envoyées avec cet identifiant. Le serveur DMS reçoit ensuite, au cours d'une étape G24, les recommandations générées par le moteur de recommandations, sous forme de métadonnées MUS2, pour la ou les structures de données LOG envoyées accompagnées de ce même identifiant. Les recommandations produites en retour correspondent à des recommandations produites spécifiquement pour les utilisateurs de ce serveur DMS, notamment selon le paramétrage de ce serveur, effectué par les utilisateurs de ce serveur.

Dans l'exemple de réalisation décrit ici, nous supposerons que le fichier musical associé aux métadonnées MUS2 est hébergé sur un serveur S2 du réseau Internet IPN.

Conformément à l'invention, le serveur UPnP DMS indexe à l'étape G26 les métadonnées MUS2 dans l'arborescence ARB, c'est-à-dire enrichit les métadonnées de l'arborescence ARB avec les métadonnées MUS2, afin de rendre les contenus recommandés - associés aux métadonnées MUS2 - sélectionnables à partir de l'arborescence ARB.

Dans l'exemple de réalisation décrit ici, ces métadonnées MUS2 sont stockées dans le répertoire réservé RM du répertoire principal "Music" de l'arborescence ARB.

Ce nouveau contenu fait partie des contenus accessibles via le serveur DMS et peut être sélectionné sur requête, par consultation du répertoire réservé RM, par tous les utilisateurs du réseau UPnP UN. Ce nouveau contenu peut donc faire l'objet d'une restitution par un dispositif de restitution UPnP, de la même manière que les contenus stockés localement par le serveur DMS qui sont indexés dès l'origine dans le répertoire CDS.

L'invention est mise en oeuvre au moyen du protocole UPnP ou au moyen de toute autre protocole utilisable pour l'accès à un serveur de contenu et l'envoi de demande d'accès à un contenu et/ou de restitution de contenu. L'invention et ses principes sont donc applicables à tout type de serveur de contenu, tout type de dispositif de restitution et tout type de moteur de recommandation.

## Revendications

1. Serveur de contenus multimédia (DMS) comportant une zone de mémoire (CL) dans laquelle sont stockées des premières métadonnées, associées à au moins un contenu accessible via ledit serveur, utilisables pour une sélection d'au moins un dit contenu en vue de formuler une demande d'accès au contenu sélectionné,
ledit serveur (DMS) étant **caractérisé en ce qu'**il comporte :
- des moyens d'enregistrement (14) aptes à enregistrer, dans une structure de données (LOG), tout ou partie desdites premières métadonnées (MUS1, VID) stockées dans ladite zone de mémoire;
- des moyens (16) pour envoyer ladite structure de données (LOG) à un moteur de recommandations (RE) apte à obtenir, à partir des premières métadonnées (MUS1, VID) contenues dans ladite structure de données (LOG), des recommandations de contenu, sous forme de deuxièmes métadonnées (MUS2) d'au moins un autre contenu accessible via ledit serveur (DMS);
- des moyens (16) pour obtenir lesdites recommandations de contenu (MUS2) ; et
- des moyens (16) pour enrichir les premières métadonnées stockées dans ladite zone de mémoire (CL) avec lesdites recommandations de contenu (MUS2).

2. Serveur (DMS) selon la revendication 1, dans lequel les moyens d'enregistrement sont conçus pour enregistrer dans ladite structure uniquement des premières métadonnées associées à un sous-ensemble prédéfini de contenus parmi l'ensemble des contenus accessibles via ledit serveur.

3. Serveur (DMS) selon la revendication 2, dans lequel le sous-ensemble prédéfini de contenus est constitué par des contenus ayant fait l'objet d'une demande d'accès via ledit serveur.

4. Serveur (DMS) selon la revendication 2, dans le sous-ensemble prédéfini est un sous-ensemble défini par l'utilisateur.

5. Serveur (DMS) selon l'une quelconque des revendications 1 à 4, **caractérisé en ce que** lesdits moyens d'enregistrement (14) sont conçus pour enregistrer dans ladite structure de données (LOG), en association avec les premières métadonnées d'au moins un contenu multimédia, une information représentative du fait que ledit serveur a déjà transmis, au moins partiellement, ledit contenu multimédia à au moins un dispositif de restitution de contenu (DMA, DMR, DMP).

6. Serveur (DMS) selon la revendication 1, **caractérisé en ce qu'**il comporte :
- des moyens (16) pour envoyer, avec ladite structure de données (LOG), un identifiant (UDN) propre audit serveur, à une entité (IMP) apte à transmettre ladite structure de données audit moteur de recommandations (RE) et à obtenir des recommandations de contenu à partir de ladite structure de données; et
- des moyens pour interroger ladite entité (IMP) au moyen dudit identifiant afin d'obtenir des recommandations de contenu générées à partir d'au moins une structure de données envoyée avec cet identifiant.

7. Serveur (DMS) selon la revendication 1, **caractérisé en ce que** ladite zone de mémoire (CL) comporte au moins une sous-zone (RM) réservée à au moins une partie des métadonnées formant recommandations de contenu (MUS2).

8. Serveur (DMS) selon la revendication 1, **caractérisé en ce que**, lorsque ledit autre contenu est stocké sur un serveur distant, lesdits moyens d'accès sont aptes à obtenir ledit autre contenu auprès du serveur distant et à relayer le contenu obtenu vers un ou plusieurs dispositifs de restitution.

9. Serveur (DMS) selon la revendication 1, **caractérisé en ce qu'**il comporte des moyens pour relayer une demande d'accès à un contenu en provenance d'un dispositif de restitution vers un serveur de contenu distant (S1, S2), les moyens d'enregistrement étant conçus pour enregistrer également dans ladite structure de données des métadonnées associées aux contenus ayant fait l'objet d'une demande de restitution de contenu relayée via ledit serveur.

10. Procédé de mise à jour d'une zone de mémoire (CL) d'un serveur (DMS) de contenus multimédia, ladite zone de mémoire (CL) comportant des premières métadonnées, associées à au moins un contenu accessible via ledit serveur, utilisables pour une sélection d'au moins un dit contenu en vue de formuler une demande d'accès au contenu sélectionné, ledit procédé étant mis en oeuvre par ledit serveur (DMS) et **caractérisé en ce qu'**il comporte :
- une étape (G12) d'enregistrement, dans une structure de données (LOG), de tout ou partie des premières métadonnées (MUS1, VID) stockées dans ladite zone de mémoire;
- une étape (G14) d'envoi de ladite structure de données (LOG) à un moteur de recommandations (RE) apte à obtenir, à partir des premières métadonnées (MUS1, VID) contenues dans ladite structure de données (LOG), des recommandations de contenu, sous forme de deuxièmes métadonnées (MUS2) d'au moins un autre contenu accessible via ledit serveur (DMS);
- une étape (G24) d'obtention desdites recommandations de contenu (MUS2) ; et
- une étape (G26) d'enrichissement des premières métadonnées stockées dans ladite zone de mémoire (CL) avec lesdites recommandations de contenu (MUS2).

11. Programme d'ordinateur comportant des instructions pour l'exécution des étapes du procédé de mise à jour selon la revendication 10 lorsque ledit programme est exécuté par un ordinateur (DMS).

12. Support d'enregistrement (13) lisible par un ordinateur (DMS) sur lequel est enregistré un programme d'ordinateur (P) comprenant des instructions pour l'exécution des étapes du procédé de mise à jour selon la revendication 10.

13. Plateforme (IMP), apte à communiquer avec au moins un serveur de contenus multimédia (DMS) selon l'une quelconque des revendications 1 à 9 et comprenant
- des moyens pour recevoir dudit serveur une structure de données (LOG) comprenant des métadonnées (MUS1, VID) associées à au moins un dit contenu multimédia;
- des moyens (16) pour transmettre ladite structure de données (LOG) à un moteur de recommandations (RE) apte à obtenir, à partir des métadonnées (MUS1, VID) contenues dans ladite structure de données (LOG), des recommandations de contenu, sous forme de métadonnées (MUS2) d'au moins un contenu accessible via ledit serveur (DMS);
- des moyens (16) pour obtenir lesdites recommandations de contenu (MUS2) ; et
- des moyens pour transmettre audit serveur lesdites recommandations de contenu (MUS2).

14. Plateforme (IMP) selon la revendication 13 comprenant
- des moyens (16) pour recevoir, avec ladite structure de données (LOG), un identifiant (UDN) propre audit serveur,
- des moyens pour fournir, sur requête comprenant ledit identifiant, des recommandations de contenu générées à partir d'au moins une structure de données envoyée avec cet identifiant.
